# EUROPEAN PATENT SPECIFICATION

(11) **EP 4 385 833 B1**
(45) Date of publication and mention of the grant of the patent: **12.11.2025**
(21) Application number: 23209219.7
(22) Date of filing: 10.11.2023
(51) Int. Cl.: B60R 21/231, B60R 21/233, B60R 21/237

(54) **VEHICLE OCCUPANT RESTRAINT DEVICE AND METHOD FOR FOLDING FAR SIDE AIRBAG**
FAHRZEUGINSASSEN-RÜCKHALTEVORRICHTUNG UND VERFAHREN ZUM FALTEN EINES SEITENAIRBAGS
DISPOSITIF DE RETENUE D'OCCUPANT DE VÉHICULE ET PROCÉDÉ DE PLIAGE D'UN COUSSIN DE SÉCURITÉ GONFLABLE CÔTÉ ÉLOIGNÉ

(30) Priority: 14.12.2022 JP 2022199816
(43) Date of publication of application: 19.06.2024
(73) Proprietor: TOYOTA JIDOSHA KABUSHIKI KAISHA, Toyota-shi, Aichi-ken, 471-8571 (JP)
(72) Inventor: HAYASHI, Shigeki, TOYOTA-SHI, AICHI-KEN, 471-8571 (JP)
(74) Representative: Cabinet Beau de Loménie

(56) References cited:
- JP-A- 2011 240 807
- KR-A- 20200 141 727
- US-A1- 2006 131 847
- US-A1- 2018 326 938
- US-A1- 2021 122 325

## Description

### BACKGROUND OF THE INVENTION

### 1. Field of the Invention

The present invention relates to vehicle occupant restraint devices and methods for folding a far side airbag.

### 2. Description of Related Art

An occupant restraint system is known in which the lower end portion of a far side airbag is deployed between the waist of an occupant sitting in a vehicle seat and a console box to restrain the occupant from moving inward in the vehicle width direction (see, for example, JP 2012-081958 A). An occupant restraint system disclosing the features of the preamble of claim1 is known in which a far side airbag includes a main chamber and a sub-chamber in communication (see e.g. US 2021/122325 A1).

### SUMMARY OF THE INVENTION

With the above configurations, however, when the lower end portion of the far side airbag does not sufficiently overlap the console box as viewed from the side, in other words, when the vehicle seat is in a forward position where the front end face of a side portion of a seatback is located forward of the front face of the console box, the occupant who is moved inward in the vehicle width direction by an inertial force due to a side-impact collision of the vehicle may fall inward in the vehicle width direction together with the far side airbag because the far side airbag does not receive a sufficient reaction force from the console box.

That is, in the case of a small occupant who adjusts the vehicle seat to the forward position, the deployed far side airbag may be rotated inward in the vehicle width direction about its rear end portion as viewed in plan, which may make it difficult to restrain the occupant with the deployed far side airbag. The deployed far side airbag may also be rotated rearward about its lower end portion as viewed from the side, which may also make it difficult to restrain the occupant with the deployed far side airbag.

The present invention provides a vehicle occupant restraint device capable of restraining an occupant with a far side airbag regardless of the position of a vehicle seat, and a method for folding the far side airbag.

A vehicle occupant restraint device according to a first aspect of the present invention is defined by claim 1.

The far side airbag includes a main chamber and a sub-chamber. The main chamber is configured in such a manner that a lower end of the main chamber is located below an upper face of the console box in a vehicle up-down direction when the main chamber is in a fully inflated and deployed state. The main chamber is configured to cover the occupant at least from a waist to a head as viewed from a side when in the fully inflated and deployed state. The sub-chamber has an upper opening that communicates with an upper communication hole in an upper portion of the main chamber and a lower opening that communicates with a lower communication hole in a lower portion of the main chamber. The sub-chamber is configured to be inflated and deployed inward in a seat width direction from a front portion of the main chamber as the gas is supplied from the upper opening and the lower opening into the sub-chamber.

According to the vehicle occupant restraint device of the first aspect of the present invention, in the event of a side-impact collision of the vehicle, the inflator may be activated and the gas ejected from the inflator may be supplied into the far side airbag. The main chamber of the far side airbag is thus inflated and deployed toward the inner side in the vehicle width direction of the occupant sitting in the vehicle seat, and the sub-chamber of the far side airbag is then inflated and deployed inward in the seat width direction (forward of the occupant in the vehicle front-rear direction) from the front portion of the main chamber. The expression "in the event of a side-impact collision of the vehicle" may include not only when a side-impact collision of the vehicle is detected but also when a side-impact collision of the vehicle is predicted.

When the occupant sitting in the vehicle seat (particularly the driver's seat) is a small occupant, the vehicle seat may be adjusted to a forward position where a front end face of a side portion of the seatback is located forward of a front face of the console box in the vehicle front-rear direction as viewed from the side. In this case, the main chamber is less likely to receive a reaction force from the console box.

However, the sub-chamber may be inflated and deployed inward in the seat width direction (forward of the occupant in the vehicle front-rear direction) from the front portion of the main chamber. Therefore, even when the main chamber is rotated inward in the vehicle width direction about its rear end portion as viewed in plan and rotated rearward in the vehicle front-rear direction about its lower end portion as viewed from the side by the occupant moved inward in the vehicle width direction by an inertial force, the occupant (particularly the occupant's head) is restrained by the sub-chamber. That is, the head of the occupant moved relatively from the main chamber due to the rotational behavior of the main chamber toward the inside in the vehicle width direction and toward the rear of the vehicle is restrained by the sub-chamber, so that the amount of movement of the occupant's head is reduced.

On the other hand, when the occupant sitting in the vehicle seat (particularly the driver's seat) is a large occupant, the vehicle seat may be adjusted to a rearward position where the front end face of the side portion of the seatback is located rearward of the front face of the console box in the vehicle front-rear direction as viewed from the side. The lower end of the main chamber may be located below the upper face of the console box in the vehicle up-down direction. The main chamber is therefore more likely to receive a reaction force from the console box.

Accordingly, the occupant (particularly the occupant's head) is restrained by the main chamber. Even when the occupant is further moved relatively toward the front of the vehicle from the main chamber due to the inertial force, the occupant (especially the occupant's head) is restrained by the sub-chamber. According to the present invention, the occupant is thus restrained by the far side airbag regardless of the position of the vehicle seat.

In the vehicle occupant restraint device of the first aspect of the present invention, the main chamber includes a constricted portion configured to be recessed rearward in the vehicle front-rear direction as viewed from the side when the main chamber is in the fully inflated and deployed state. The constricted portion is located in a middle part in the vehicle up-down direction of the front portion of the main chamber in the fully inflated and deployed state. The constricted portion is configured to be covered from inside in the seat width direction by the sub-chamber in a fully inflated and deployed state.

Therefore, the capacity of the main chamber can be reduced and the main chamber can be inflated and deployed faster, as compared to the case where the main chamber does not include the constricted portion. Since the capacity of the main chamber is reduced, the manufacturing cost of the main chamber can also be reduced.

As used herein, the "middle part in the vehicle up-down direction" may include not only a physically middle part position in the vehicle up-down direction but also substantially the same position as the physically middle part position in the vehicle up-down direction with a small difference.

Because the constricted portion is covered from inside in the seat width direction by the sub-chamber in the fully inflated and deployed state, the portion of the main chamber that is located above the constricted portion is pulled downward by the sub-chamber. That is, tension in the vehicle up-down direction is applied to the main chamber, and the amount of movement of the occupant's head is further reduced by the main chamber and the sub-chamber.

In the vehicle occupant restraint device of the first aspect of the present invention, an upper end of the sub-chamber in the fully inflated and deployed state may be located at a same height position as an upper end of the front portion of the main chamber in the fully inflated and deployed state, as viewed from the side.

According to the vehicle occupant restraint device of the first aspect of the present invention, the upper end of the sub-chamber in the fully inflated and deployed state may be located at the same height position as the upper end of the front portion of the main chamber in the fully inflated and deployed state, as viewed from the side. Therefore, the occupant's head can be more effectively restrained by the sub-chamber as compared to the case where the upper end of the sub-chamber in the fully inflated and deployed state is located at a height position lower than the upper end of the front portion of the main chamber in the fully inflated and deployed state. As used herein, the "same height position" may include not only physically the same height position but also substantially the same height position with a very small difference.

In the vehicle occupant restraint device of the first aspect of the present invention, a peripheral portion of the upper opening of the sub-chamber may be sewn to a peripheral portion of the upper communication hole of the main chamber, and a peripheral portion of the lower opening of the sub-chamber may be sewn to a peripheral portion of the lower communication hole of the main chamber.

According to the vehicle occupant restraint device of the first aspect of the present invention, the peripheral portion of the upper opening of the sub-chamber may be sewn to the peripheral portion of the upper communication hole of the main chamber, and the peripheral portion of the lower opening of the sub-chamber may be sewn to the peripheral portion of the lower communication hole of the main chamber. The main chamber and the sub-chamber are thus connected by a simple configuration. That is, the far side airbag can be easily manufactured.

In the vehicle occupant restraint device of the first aspect of the present invention, a peripheral edge portion of an overlapping portion of the sub-chamber may be sewn to the main chamber, the overlapping portion overlapping the main chamber as viewed from the side.

According to the vehicle occupant restraint device of the first aspect of the present invention, the peripheral edge portion of the overlapping portion of the sub-chamber may be sewn to the main chamber, that the overlapping portion overlapping the main chamber as viewed from the side. The main chamber and the sub-chamber can thus be easily connected by one sewing. That is, the far side airbag can be easily manufactured.

In the vehicle occupant restraint device of the first aspect of the present invention, the lower communication hole of the main chamber may have a larger opening area than the upper communication hole of the main chamber and the lower opening of the sub-chamber may have a larger opening area than the upper opening of the sub-chamber.

According to the vehicle occupant restraint device of the first aspect of the present invention, the lower communication hole of the main chamber may have a larger opening area than the upper communication hole of the main chamber and the lower opening of the sub-chamber may have a larger opening area than the upper opening of the sub-chamber. Therefore, an initial restraining force on the lower torso of the occupant is increased and the amount of movement of the occupant is further reduced as compared to the case where the lower communication hole of the main chamber have the same opening area as the upper communication hole of the main chamber and the lower opening of the sub-chamber have the same opening area as the upper opening of the sub-chamber.

In the vehicle occupant restraint device of the first aspect of the present invention, check valves configured not to allow backflow of the gas from the sub-chamber into the main chamber may be located in the upper communication hole and the lower communication hole of the main chamber or in the upper opening and the lower opening of the sub-chamber.

According to the vehicle occupant restraint device of the first aspect of the present invention, the check valves configured not to allow backflow of the gas from the sub-chamber into the main chamber may be located in the upper communication hole and the lower communication hole of the main chamber or in the upper opening and the lower opening of the sub-chamber. Therefore, a high pressure is maintained in the sub-chamber, and a reaction force continues to be applied to the occupant moved by the inertial force. Moreover, bottoming out of the sub-chamber interposed between the head of the occupant sitting in the driver's seat and the head of an occupant sitting in a front passenger seat (collision between the heads of the two occupants) can be reduced or prevented, and the heads of the occupants can be protected.

A method for folding the far side airbag according to a second aspect of the present invention may be a method for folding the far side airbag in the vehicle occupant restraint device of the first aspect of the present invention. The method may include: a flattening step of flattening the sub-chamber onto the main chamber; a bellows folding step of folding the sub-chamber after the flattening step and the main chamber in bellows along creases extending in the vehicle up-down direction; and a folding step of folding the main chamber and the sub-chamber after the bellows folding step so as to bring upper ends of the main chamber and the sub-chamber and lower ends of the main chamber and the sub-chamber close to each other.

According to the method for folding a far side airbag of the second aspect of the present invention, after the sub-chamber is flattened onto the main chamber, the flattened sub-chamber and the main chamber may be folded in bellows along creases extending in the vehicle up-down direction, and the main chamber and the sub-chamber after the bellows folding step may be then folded so as to bring upper ends of the main chamber and the sub-chamber and lower ends of the main chamber and the sub-chamber close to each other. Therefore, the sub-chamber and the main chamber can be folded compactly even when the sub-chamber is connected to the main chamber.

A method for folding the far side airbag according to a third aspect of the present invention may be a method for folding the far side airbag in the vehicle occupant restraint device of the first aspect of the present invention. The method may include: a first outward winding step of winding the sub-chamber outward into a roll on the main chamber in such a manner that an axial direction of the roll of the sub-chamber matches the vehicle up-down direction; a second outward winding step of winding the sub-chamber after the first outward winding step and the main chamber outward into a roll in such a manner that an axial direction of the roll of the main chamber and the sub-chamber matches the vehicle up-down direction; and a folding step of folding the main chamber and the sub-chamber after the second outward winding step so as to bring upper ends of the main chamber and the sub-chamber and lower ends of the main chamber and the sub-chamber close to each other.

According to the method for folding the far side airbag of the third aspect of the present invention, after the sub-chamber is wound outward into a roll on the main chamber in such a manner that the axial direction of the roll of the sub-chamber matches the vehicle up-down direction, the roll of the sub-chamber together with the main chamber may be wound outward into a roll in such a manner that the axial direction of the roll of the main chamber and the sub-chamber matches the vehicle up-down direction, and the main chamber and the sub-chamber may be then folded so as to bring upper ends of the main chamber and the sub-chamber and lower ends of the main chamber and the sub-chamber close to each other. Therefore, the sub-chamber and the main chamber can be folded compactly even when the sub-chamber is connected to the main chamber. Since the sub-chamber may be wound outward, the sub-chamber's hitting the face of the occupant when the sub-chamber is inflated and deployed is reduced or prevented.

As described above, according to the present invention, the occupant can be restrained by the far side airbag regardless of the position of the vehicle seat.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic side view showing a far side airbag in an inflated and deployed state when a vehicle seat of a vehicle occupant restraint device according to an embodiment is positioned at a forward position;
FIG. 2 is a schematic plan view showing the far side airbag in the inflated and deployed state when the vehicle seat of the vehicle occupant restraint device according to the embodiment is positioned at the forward position;
FIG. 3 is a schematic plan view illustrating the behaviors of a small occupant and the far side airbag when a vehicle has a side-impact collision with the vehicle seat of the vehicle occupant restraint device according to the embodiment positioned at the forward position;
FIG. 4 is a schematic side view showing the far side airbag in the inflated and deployed state when the vehicle seat of the vehicle occupant restraint device according to the embodiment is positioned at a rearward position;
FIG. 5 is a schematic plan view showing the far side airbag in the inflated and deployed state when the vehicle seat of the vehicle occupant restraint device according to the embodiment is positioned at the rearward position;
FIG. 6 is a schematic plan view illustrating the behaviors of a large occupant and the far side airbag when the vehicle has a side-impact collision with the vehicle seat of the vehicle occupant restraint device according to the embodiment positioned at the rearward position;
FIG. 7 is a schematic enlarged side view showing, partially in section, the far side airbag according to the embodiment as viewed from the inner side in the seat width direction in the case where a sub-chamber is sewn to a main chamber along the peripheries of openings communicating with communication holes;
FIG. 8 is a schematic enlarged plan view showing, in section, the inside of the far side airbag according to the embodiment;
FIG. 9 is a schematic enlarged side view showing, partially in section, the far side airbag according to the embodiment as viewed from the inner side in the seat width direction in the case where the sub-chamber is sewn to the main chamber along a peripheral edge portion of an overlapping portion of the sub-chamber that overlaps the main chamber;
FIG. 10 is a schematic enlarged plan view showing, in section, the inside of a far side airbag with check valves according to a modification of the embodiment;
FIG. 11 is a graph showing how the internal pressure of a sub-chamber of the far side airbag with the check valves according to the modification of the embodiment changes with time, in comparison with the case where a far side airbag has no check valve;
FIG. 12 illustrates a bellows folding method for the far side airbag according to the embodiment;
FIG. 13 illustrates a roll folding method for the far side airbag according to the present embodiment; and
FIG. 14 is a schematic plan view of the far side airbag folded by the roll folding method according to the present embodiment being inflated and deployed.

### DETAILED DESCRIPTION OF EMBODIMENTS

Hereinafter, an embodiment according to the present invention will be described in detail with reference to the drawings. For convenience of description, arrows UP, FR, LH, and RH shown as appropriate in the figures indicate the upward direction, forward direction, left direction, and right direction of a vehicle and a vehicle seat, respectively. When terms indicating upward, downward, forward, rearward, right, and left directions are used in the following description, they mean the upward, downward, forward, rearward, right, and left directions of the vehicle and the vehicle seat unless otherwise specified. The left-right direction is synonymous with the vehicle width direction and the seat width direction.

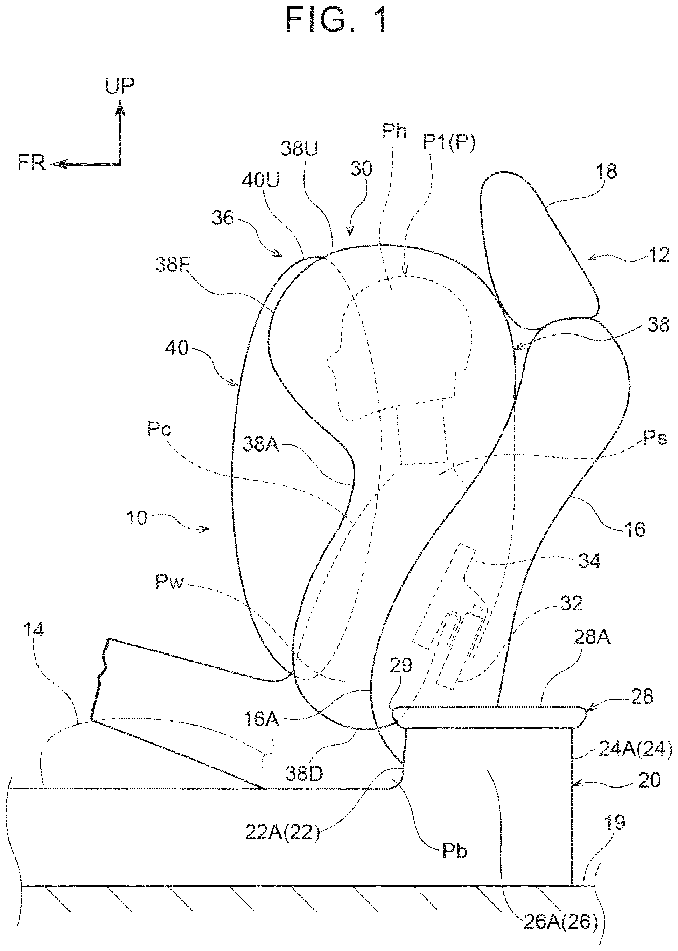

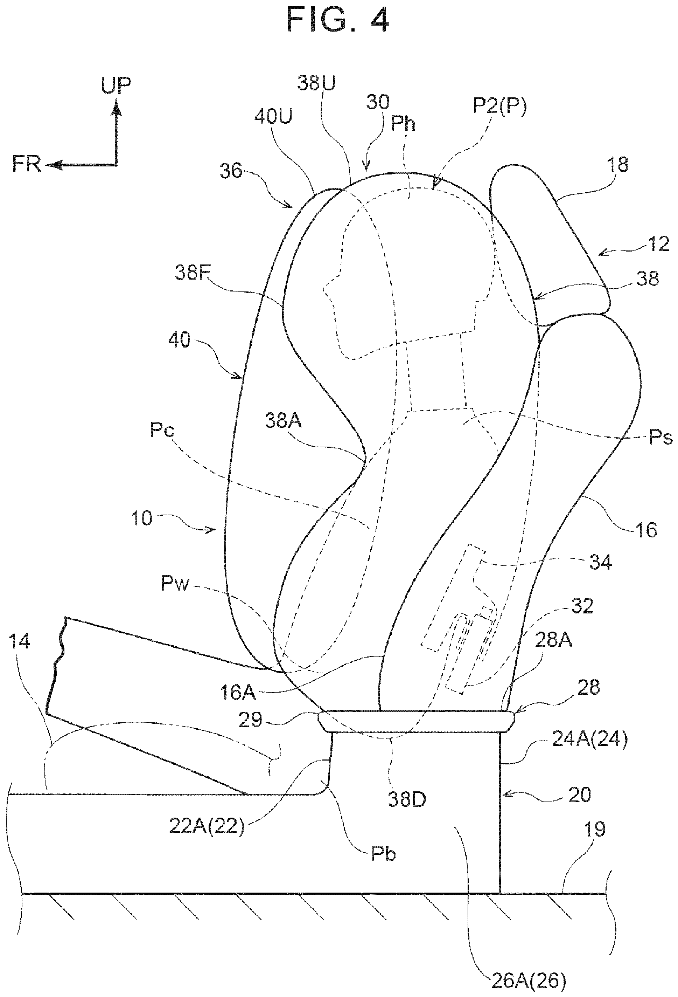

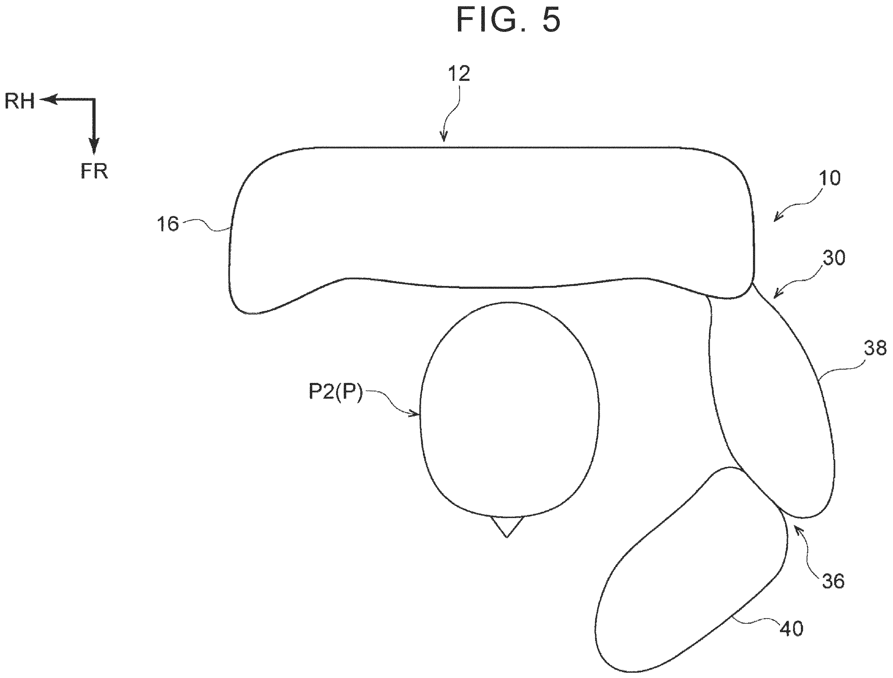

An "occupant P1" shown in FIGS. 1, 2, and 3 is, for example, a small occupant equivalent to AF05 (5th percentile American adult female) in Worldwide Harmonized Side Impact Dummy (WorldSID). An "occupant P2" shown in FIGS. 4, 5, and 6 is, for example, a large occupant equivalent to AM95 (95th percentile American adult male) in WorldSID. Hereinafter, when it is not necessary to distinguish between the small occupant P1 and the large occupant P2, they will be simply referred to as "occupants P."

As shown in FIGS. 1 and 4, a vehicle seat 12 of a vehicle occupant restraint device 10 according to the present embodiment includes a seat cushion 14 on which the occupant P sits (that supports the buttocks Pb and thighs of the occupant P), a seatback 16 that supports the back of the occupant P, and a headrest 18 that supports the head Ph of the occupant P. This vehicle seat 12 is, for example, a right front seat installed in a vehicle cabin of a vehicle, and is configured to move in the front-rear direction by a known electrical mechanism.

As viewed from the side, the seat cushion 14 extends in the front-rear direction, the seatback 16 is pivotably connected to the rear end portion of the seat cushion 14 such that the axial direction of the seatback 16 matches the seat width direction, and the seatback 16 extends in the up-down direction. "As viewed from the side" means "as view in the vehicle width direction (seat width direction). The headrest 18 is mounted on a middle part in the seat width direction of the upper end portion of the seatback 16 in such a manner that the headrest 18 can be raised and lowered. In the following description, a front end face 16A refers to the forwardmost end face of the lower side of a side portion of the seatback 16. The occupant P is restrained in the vehicle seat 12 by a seatbelt device (not shown).

A console box 20 is installed on a floor 19 of the vehicle cabin at a position inward of the vehicle seat 12 in the vehicle width direction (on a middle portion in the vehicle width direction of the floor 19). The console box 20 is a rectangular hollow box whose longitudinal direction is the front-rear direction, as viewed in plan. A front wall 22 and a rear wall 24 of the console box 20 have a front face 22A and a rear face 24A, respectively, and right and left side walls 26 of the console box 20 have side faces 26A (only the left side face is shown, and the right side face is not shown). The front face 22A, the rear face 24A, and the side faces 26A are flat faces.

The console box 20 is open at the top, and is configured to be opened and closed by a lid 28 having a predetermined thickness. A front end portion of the lid 28 of the console box 20 is an overhang portion 29 protruding forward beyond the front face 22A of the front wall 22 by a predetermined length as viewed from the side. The height to an upper face 28A of the lid 28 of the console box 20 is set such that the occupant P can rest his or her elbow (not shown) on the upper face 28A without taking an uncomfortable posture.

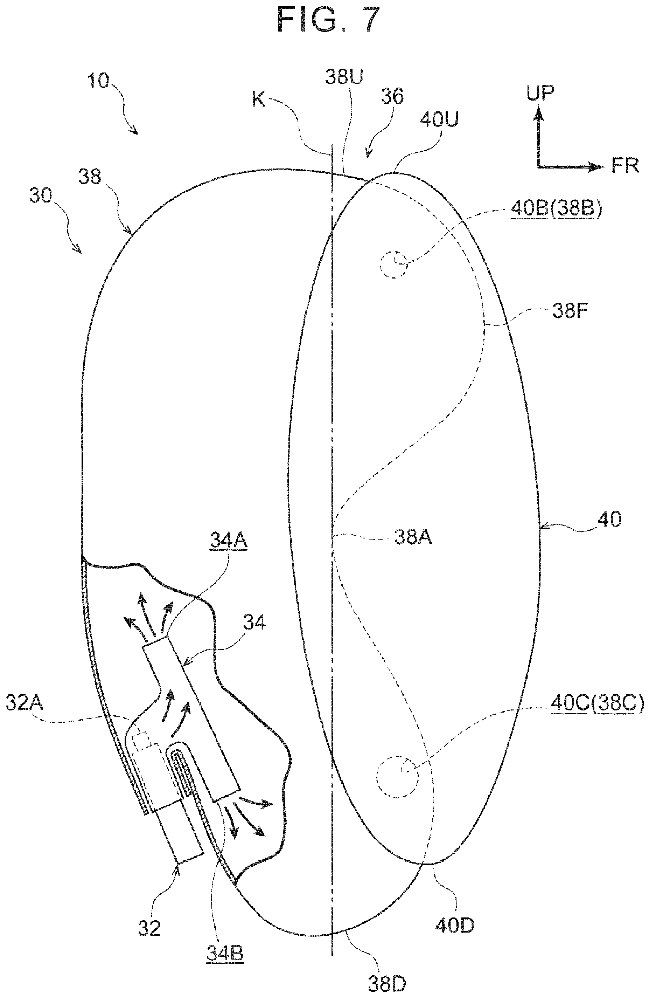

A far side airbag device 30 is installed in a side portion on the left side of the seatback 16 (hereinafter referred to as "left side portion") that is an inner side portion in the vehicle width direction of the seatback 16. As shown in FIG. 7, the far side airbag device 30 includes an inflator 32 embedded in the left side portion of the seatback 16, an inner cloth (inner tube) 34 for distributing gas ejected from the inflator 32 upward and downward, and a far side airbag 36 containing the inner cloth 34.

The inflator 32 is a cylinder-type gas generating device formed in a substantially cylindrical shape, and the axial direction of the inflator 32 matches a direction along side frames (not shown) that form a framework of the right and left side portions of the seatback 16 (substantially up-down direction). The inflator 32 is actuated when a side-impact collision of the vehicle is detected or predicted (hereinafter referred to as "in the event of a side-impact collision"), so that the inflator 32 can instantly supply gas into the far side airbag 36 via the inner cloth 34 in the inner portion of the far side airbag 36.

Specifically, a lower end portion of the rear side of the inner cloth 34 is connected to an upper end portion 32A of the inflator 32. The front side of the inner cloth 34 is formed in a tubular shape whose axial direction matches the substantially up-down direction. The front side of the inner cloth 34 has an upper opening 34A and a lower opening 34B. The inner cloth 34 can thus blow out the gas ejected from the inflator 32 upward and downward inside the far side airbag 36. With this structure, the far side airbag 36 is rapidly inflated and deployed.

As shown in FIGS. 1 to 6, the far side airbag 36 is installed in the left side portion of the seatback 16, and includes a main chamber 38 and a sub-chamber 40. When the gas is supplied into the far side airbag 36, the main chamber 38 is inflated and deployed toward the inner side in the vehicle width direction of the buttocks Pb, waist Pw, chest Pc, shoulder Ps, and head Ph of the occupant P sitting in the vehicle seat 12, and the sub-chamber 40 is inflated and deployed inward in the seat width direction and forward of the vehicle seat 12 (forward of the occupant P) from a front portion 38F of the main chamber 38.

As shown in FIGS. 1 and 4, when in a fully inflated and deployed state, the main chamber 38 extends from the upper end portion of the headrest 18 to the lower end portion of the seatback 16 (to the seat cushion 14) as viewed from the side, and covers the occupant P from the buttocks Pb (at least the waist Pw) to the head Ph. The upper portion of the main chamber 38 is formed in a substantially elliptical shape bulging forward so that the upper portion of the main chamber 38 can effectively restrain the head Ph of the occupant P.

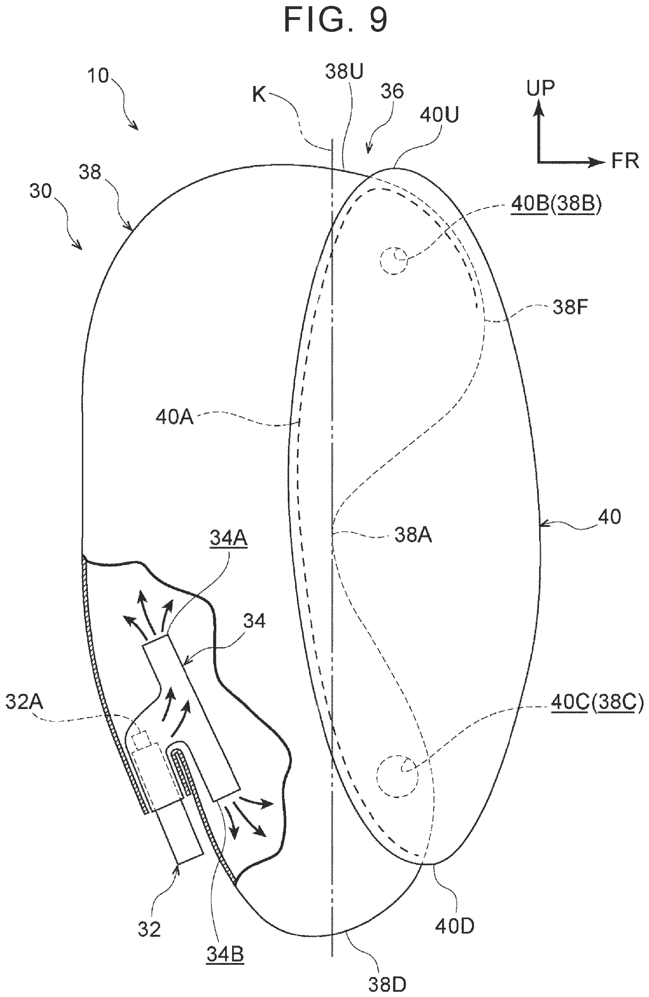

In other words, the main chamber 38 includes a constricted portion 38A configured to be recessed rearward in a substantially V-shape as viewed from the side when the main chamber 38 is fully inflated and deployed. The constricted portion 38A is located in a middle part in the up-down direction of the front portion 38F of the main chamber 38 in the fully inflated and deployed state. Therefore, the front portion 38F of the main chamber 38 refers to an area forward of an imaginary straight line K (see FIGS. 7 and 9) passing through the rearmost edge of the constricted portion 38A and extending in the substantially up-down direction as viewed from the side.

When the main chamber 38 is in the fully inflated and deployed state, a lower end face 38D (lower end) of the main chamber 38 is located below the upper face 28A of the lid 28 of the console box 20 as viewed from the front and the side. The main chamber 38 is in the form of a single bag formed by sewing the outer peripheral edge portions of two pieces of base cloth together.

The sub-chamber 40 is formed in a substantially elliptical shape that is long in the up-down direction as viewed from the side, and has a length extending from an upper end face 38U of the front portion 38F of the main chamber 38 to near the lower end face 38D. That is, an upper end face 40U (upper end) of the sub-chamber 40 in the fully inflated and deployed state is located at substantially the same height position as the upper end face 38U (upper end) of the front portion 38F of the main chamber 38 in the fully inflated and deployed state, as viewed from the side.

The length (maximum length) in the front-rear direction of the substantially middle part in the up-down direction of the sub-chamber 40 is large enough that the sub-chamber 40 in the fully inflated and deployed state can cover the entire constricted portion 38A of the main chamber 38 from inside in the seat width direction as viewed from the side. That is, the length (maximum length) in the front-rear direction of the substantially middle part in the up-down direction of the sub-chamber 40 is large enough that the sub-chamber 40 in the fully inflated and deployed state can substantially overlap the front portion 38F of the main chamber 38 as viewed from the side. The sub-chamber 40 is also in the form of a single bag formed by sewing the outer peripheral edge portions of two pieces of base cloth together.

As shown in FIG. 7, the upper part (above the constricted portion 38A) and lower part (below the constricted portion 38A) of the front portion 38F of the main chamber 38 have an upper communication hole 38B and a lower communication hole 38C, respectively. The upper communication hole 38B and the lower communication hole 38C are each formed in a circular shape with a predetermined inner diameter, and the lower communication hole 38C has a larger opening area than the upper communication hole 38B.

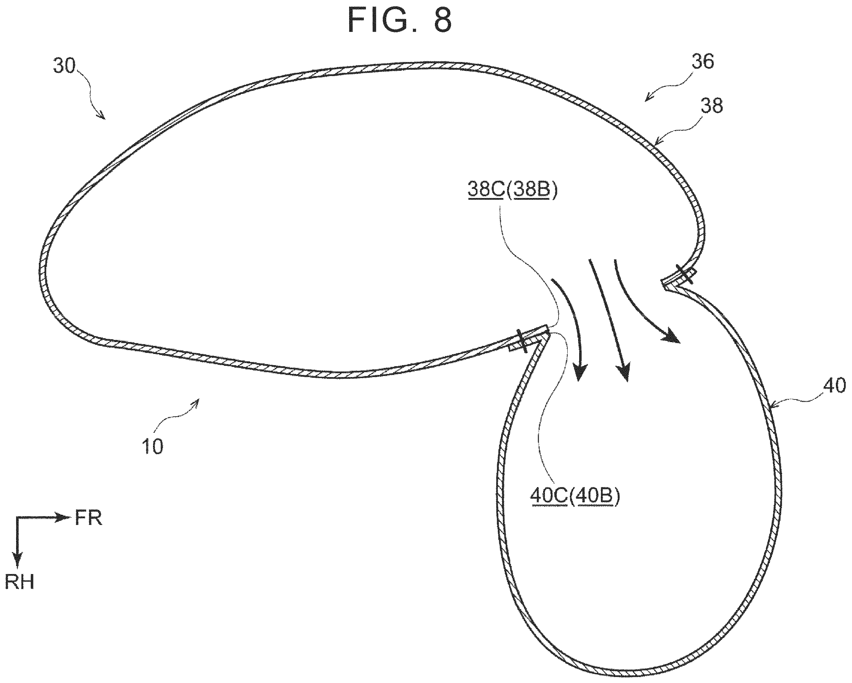

The upper and lower portion of the sub-chamber 40 have an upper opening 40B and a lower opening 40C, respectively. The upper opening 40B and the lower opening 40C communicate with the upper communication hole 38B and the lower communication hole 38C, respectively. The upper opening 40B and the lower opening 40C are also each formed in a circular shape with a predetermined inner diameter, and the lower opening 40C has a larger opening area than the upper opening 40B. The peripheral portion of the upper opening 40B is sewn to the peripheral portion of the upper communication hole 38B, and the peripheral portion of the lower opening 40C is sewn to the peripheral portion of the lower communication hole 38C (see FIG. 8).

The sub-chamber 40 is thus connected to the front portion 38F of the main chamber 38, so that, as shown in FIG. 8, the gas supplied into the main chamber 38 is supplied from the main chamber 38 into the sub-chamber 40 through the upper communication hole 38B and the lower communication hole 38C and through the upper opening 40B and the lower opening 40C.

The upper communication hole 38B and the lower communication hole 38C are not limited to the illustrated circular shape. Although not shown in the figures, the upper communication hole 38B and the lower communication hole 38C may be in the form of a slit. In this case, the slit length of the lower communication hole 38C may be any length as long as it is longer than the slit length of the upper communication hole 38B. The slit shape may be vertically long, horizontally long, or obliquely long.

However, each of the upper communication hole 38B and the lower communication hole 38C is preferably in a circular shape because the sub-chamber 40 is inflated and deployed faster than when each of the upper communication hole 38B and the lower communication hole 38C is in the form of a slit having the same length as the diameter of a corresponding one of the circles. In any case, the sub-chamber 40 is inflated and deployed later than the main chamber 38 through the upper communication hole 38B and the lower communication hole 38C.

The sub-chamber 40 is not limited to the configuration in which the sub-chamber 40 is connected to the main chamber 38 by sewing the peripheral portion of the upper opening 40B and the peripheral portion of the lower opening 40C to the peripheral portion of the upper communication hole 38B and the peripheral portion of the lower communication hole 38C, respectively. For example, as shown in FIG. 9, the sub-chamber 40 may be connected to the main chamber 38 by sewing to the main chamber 38 a peripheral edge portion 40A of an overlapping portion of the sub-chamber 40 that overlaps a portion of the main chamber 38 other than the constricted portion 38A as viewed from the side.

Next, the functions of the vehicle occupant restraint device 10 according to the present embodiment having the above configuration will be described.

In the event of a side-impact collision of the vehicle, the inflator 32 is actuated, so that the gas ejected from the inflator 32 is instantly supplied into the inner cloth 34 and is supplied into the far side airbag 36 (main chamber 38) from the upper opening 34A and the lower opening 34B of the inner cloth 34. Upholstery of the left side portion of the seatback 16 then gets torn from its lower end portion to upper end portion due to the internal pressure (inflation pressure) of the far side airbag 36 that has started inflating with the supplied gas.

That is, the main chamber 38 of the far side airbag 36 is inflated and deployed toward the left side faces (inner side in the vehicle width direction) of the buttocks Pb, waist Pw, chest Pc, shoulders Ps, and head Ph of the occupant P sitting in the vehicle seat 12. The left side face of the occupant P is thus covered from the buttocks Pb (at least the waist Pw) to the head Ph by the main chamber 38 from the left side. Therefore, in the event of a side-impact collision of the vehicle, the left side face of the occupant P, from the head Ph to the buttocks Pb, can be restrained by the main chamber 38.

The sub-chamber 40 of the far side airbag 36 is inflated and deployed inward in the seat width direction and forward of the vehicle seat 12 (forward of the occupant P) from the front portion 38F of the main chamber 38 later than the main chamber 38. As shown in FIG. 1, when the occupant P sitting in the vehicle seat 12 (particularly the driver's seat) is the small occupant P1, the vehicle seat 12 is adjusted to a forward position where the front end face 16A of the lower side of the side portion of the seatback 16 is located forward of the front face 22A of the front wall 22 of the console box 20 as viewed from the side.

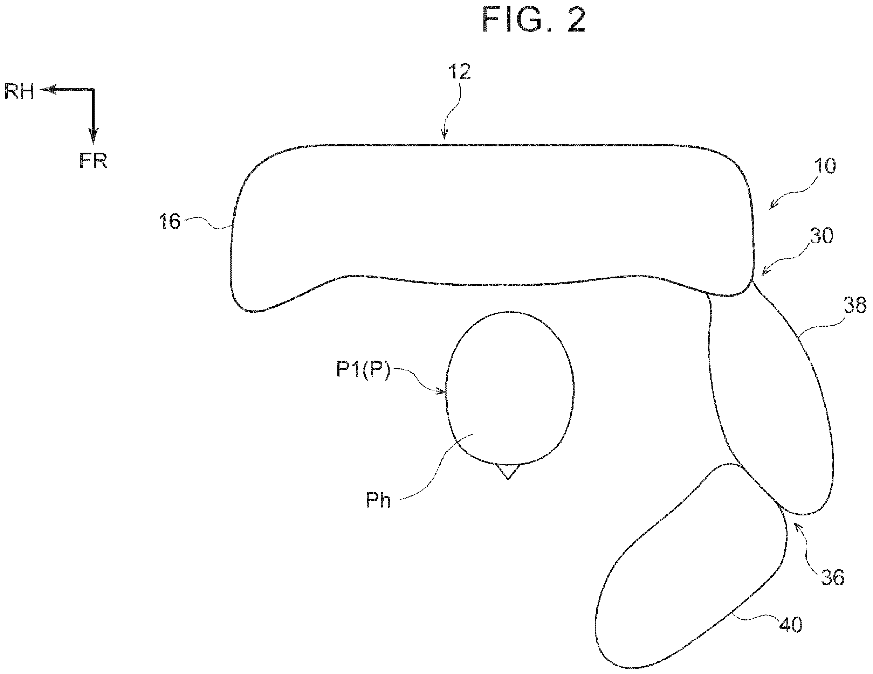

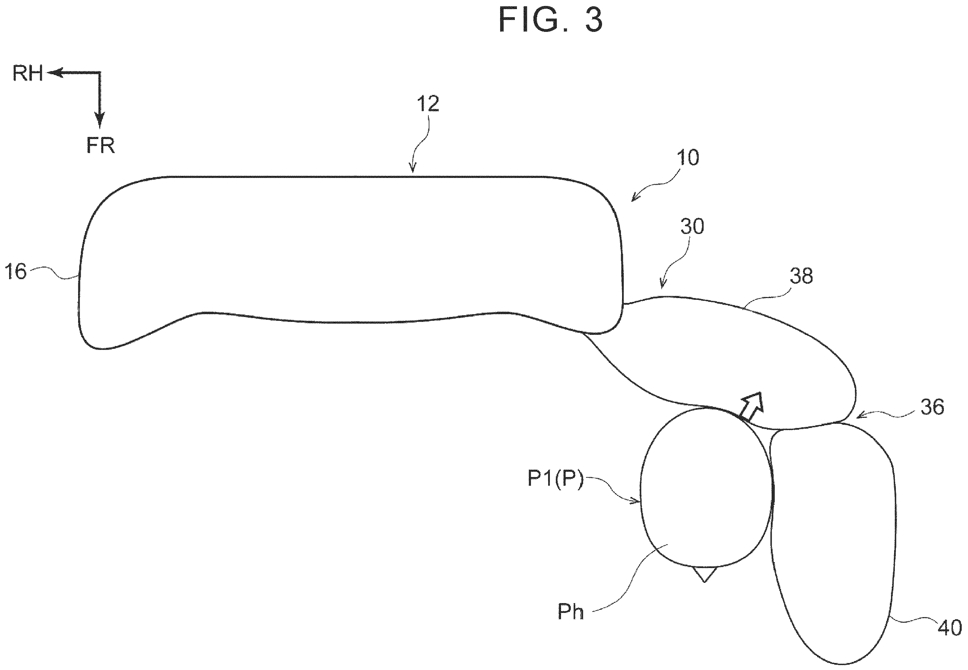

Therefore, the main chamber 38 is less likely to receive a reaction force from the console box 20. Specifically, when the vehicle has a side-impact collision and the occupant P1 shown in FIG. 2 is moved inward in the vehicle width direction due to an inertia force, the main chamber 38 is pushed by the occupant P1 and rotated inward (falls inward) in the vehicle width direction about its rear end portion as viewed in plan, as shown by an arrow in FIG. 3. Although not shown in the figures, the main chamber 38 is then rotated rearward about its lower end portion as viewed from the side.

However, the sub-chamber 40 is inflated and deployed inward in the seat width direction and forward of the vehicle seat 12 (forward of the occupant P1) from the front portion 38F of the main chamber 38. Therefore, even when the main chamber 38 is rotated inward in the vehicle width direction about its rear end portion as viewed in plan and rotated rearward about its lower end portion as viewed from the side by the occupant P1 moved inward in the vehicle width direction by the inertial force, the occupant P1 (particularly the head Ph) is restrained by the sub-chamber 40.

In other words, even when the main chamber 38 of the far side airbag 36 does not sufficiently overlap the console box 20 (even when the main chamber 38 is shifted forward with respect to the console box 20) as viewed from the side, the head Ph of the occupant P1 moved relatively from the main chamber 38 due to the rotational behavior of the main chamber 38 toward the inside in the vehicle width direction and toward the rear can be restrained by the sub-chamber 40 of the far side airbag 36, so that the amount of movement of the head Ph of the occupant P1 can be reduced.

As described above, even when the vehicle seat 12 is in the forward position, the far side airbag 36 that is inflated and deployed from the left side portion of the seatback 16 toward the inner side in the vehicle width direction of the occupant P1 ensures the performance of restraining the small occupant P1 sitting in the vehicle seat 12 in the forward position.

As shown in FIG. 4, when the occupant P sitting in the vehicle seat 12 (particularly the driver's seat) is the large occupant P2, the vehicle seat 12 is adjusted to a rearward position where the front end face 16A of the lower side of the side portion of the seatback 16 is located rearward of the front face 22A of the console box 20 as viewed from the side.

The lower end face 38D of the main chamber 38 is located below the upper face 28A of the console box 20. Therefore, the lower portion of the main chamber 38 is interposed between the side face of the right side wall (not shown) of the console box 20 and the buttocks Pb of the occupant P2. That is, the main chamber 38 of the far side airbag 36 overlaps the console box 20 as viewed from the side.

The main chamber 38 is therefore more likely to receive a reaction force from the console box 20. Accordingly, even when the main chamber 38 is pushed by the occupant P2 moved inward in the vehicle width direction due to the inertia force, the main chamber 38 is less likely to be rotated inward (fall inward) in the vehicle width direction about its rear end portion as viewed in plan, and is less likely to be rotated rearward about its lower end portion as viewed from the side. That is, the occupant P2 (particularly the head Ph) is restrained by the main chamber 38.

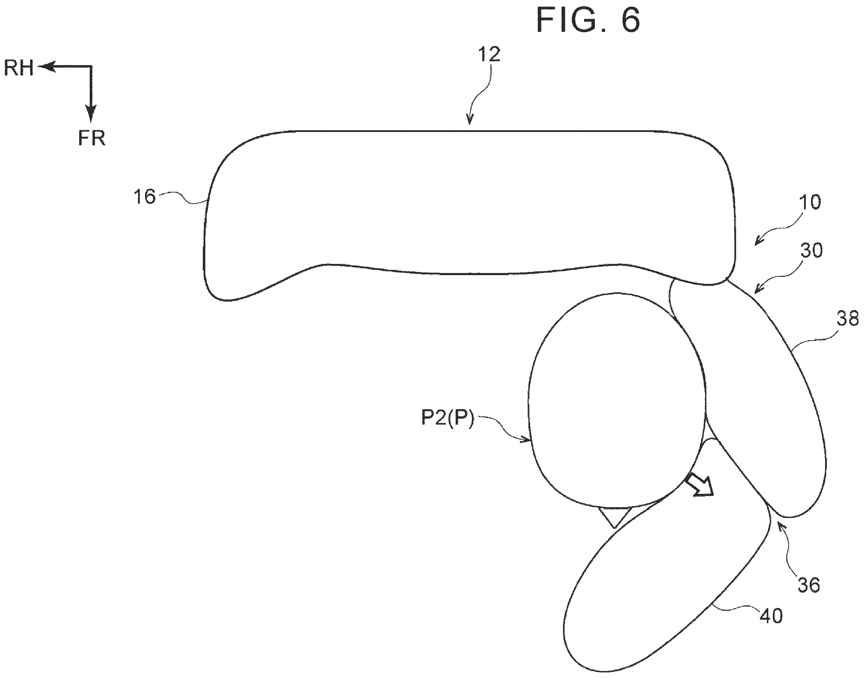

The occupant P2 is a large occupant. Therefore, after the occupant P2 is moved inward in the vehicle width direction due to the inertial force, the occupant P2 is further moved relatively forward from the main chamber 38 (slides out of the main chamber 38) as shown by an arrow in FIG. 6. However, the sub-chamber 40 is inflated and deployed from the front portion 38F of the main chamber 38 as described above. Therefore, even when the occupant P2 is moved relatively forward from the main chamber 38, the occupant P2 (particularly the head Ph) is restrained by the sub-chamber 40. According to the present embodiment, the occupant P (particularly the head Ph) can thus be restrained by the far side airbag 36 regardless of the position of the vehicle seat 12.

Moreover, the upper end face 40U of the sub-chamber 40 in the fully inflated and deployed state is located at substantially the same height position as the upper end face 38U of the front portion 38F of the main chamber 38 in the fully inflated and deployed state, as viewed from the side. Therefore, the occupant P, particularly the head Ph, can be more effectively restrained by the sub-chamber 40 as compared to the case where the upper end face 40U of the sub-chamber 40 in the fully inflated and deployed state is located at a height position lower than the upper end face 38U of the front portion 38F of the main chamber 38 in the fully inflated and deployed state.

The main chamber 38 includes the constricted portion 38A configured to be recessed rearward in a substantially V-shape as viewed from the side when the main chamber is fully inflated and deployed. The constricted portion 38A is located in the substantially middle part in the up-down direction of the front portion 38F of the main chamber 38 in the fully inflated and deployed state. Therefore, the capacity of the main chamber 38 can be reduced and the main chamber 38 can be inflated and deployed faster, as compared to the case where the main chamber 38 does not include the constricted portion 38A. Since the capacity of the main chamber 38 is reduced, the manufacturing cost of the main chamber 38 can also be reduced.

The constricted portion 38A is covered from inside in the seat width direction by the sub-chamber 40 in the fully inflated and deployed state. Therefore, the portion of the main chamber 38 that is located above the constricted portion 38A is pulled downward by the sub-chamber 40. That is, tension in the up-down direction is applied to the main chamber 38. The occupant P, particularly the head Ph, can therefore be more effectively restrained by the main chamber 38 and the sub-chamber 40, so that the amount of movement of the occupant P, particularly the head Ph, can further be reduced.

The peripheral portion of the upper opening 40B of the sub-chamber 40 is sewn to the peripheral portion of the upper communication hole 38B of the main chamber 38, and the peripheral portion of the lower opening 40C of the sub-chamber 40 is sewn to the peripheral portion of the lower communication hole 38C of the main chamber 38. The main chamber 38 and the sub-chamber 40 can thus be connected by a simple configuration. That is, the far side airbag 36 can be easily manufactured.

As described above, the peripheral edge portion 40A of the overlapping portion of the sub-chamber 40 that overlaps the main chamber 38 as viewed from the side may be sewn to the main chamber 38. The main chamber 38 and the sub-chamber 40 can thus be easily connected by one sewing. That is, the far side airbag 36 can be more easily manufactured.

The lower communication hole 38C of the main chamber 38 and the lower opening 40C of the sub-chamber 40 have a larger opening area than the upper communication hole 38B of the main chamber 38 and the upper opening 40B of the sub-chamber 40. Therefore, an initial restraining force on the lower torso (buttocks Pb and waist Pw) of the occupant P can be increased and the amount of movement of the occupant P can further be reduced as compared to the case where the lower communication hole 38C of the main chamber 38 and the lower opening 40C of the sub-chamber 40 have the same opening area as the upper communication hole 38B of the main chamber 38 and the upper opening 40B of the sub-chamber 40, respectively.

The upper communication hole 38B and the lower communication hole 38C of the main chamber 38 are formed in a circular shape or in the form of a slit. Accordingly, the inflation and deployment completion time of the sub-chamber 40 can be adjusted by a simpler configuration as compared to the case where the upper communication hole 38B and the lower communication hole 38C of the main chamber 38 are not formed in a circular shape or in the form of a slit. That is, by adjusting the inner diameters of the circles or the lengths of the slits, the inflation and deployment completion time of the sub-chamber 40 can be easily adjusted to be later than the inflation and deployment completion time of the main chamber 38.

### Modification

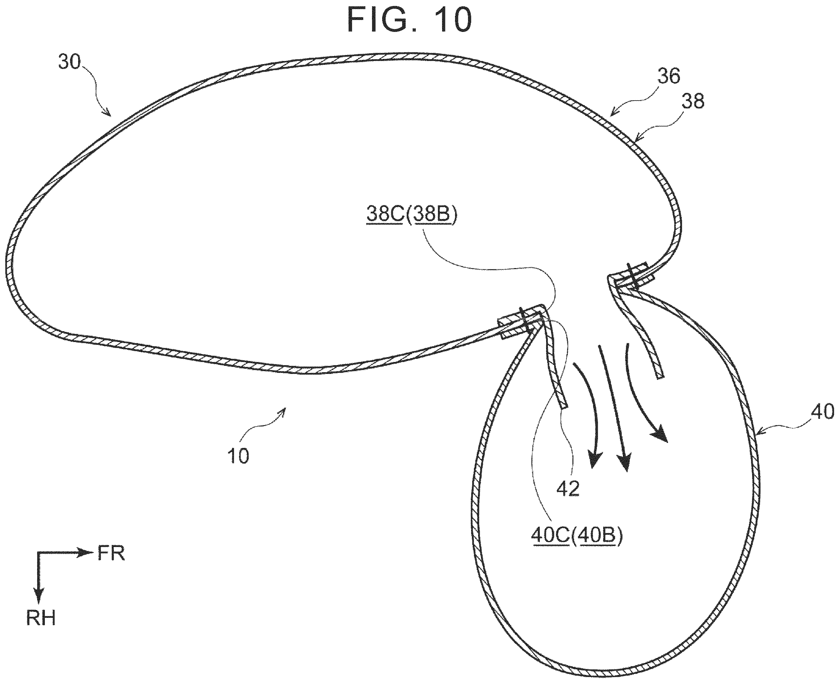

As shown in FIG. 10, check valves 42 configured not to allow backflow of the gas from the sub-chamber 40 into the main chamber 38 may be mounted in the upper communication hole 38B and the lower communication hole 38C of the main chamber 38. The check valves 42 are configured to deform and open to form a substantially tubular shape only when the gas flows from the main chamber 38 into the sub-chamber 40.

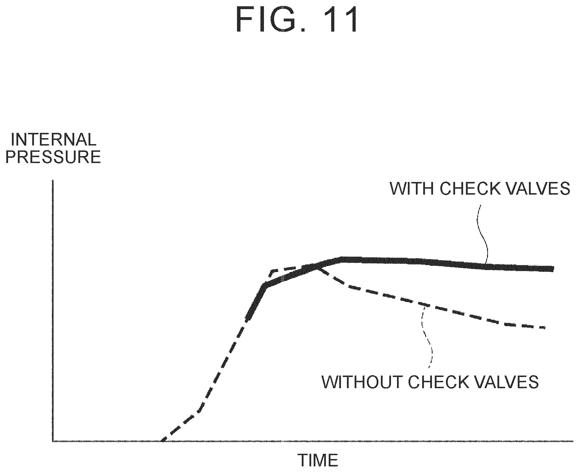

With this configuration, as shown in FIG. 11, a higher internal pressure can be maintained in the sub-chamber 40 (shown by a continuous line) as compared to the case where the check valves 42 configured not to allow backflow of the gas from the sub-chamber 40 into the main chamber 38 are not mounted in the upper communication hole 38B and the lower communication hole 38C of the main chamber 38 (shown by a dashed line). The reaction force can therefore be continuously applied to the occupant P moved by the inertial force.

Moreover, bottoming out of the sub-chamber 40 interposed between the head Ph of the occupant P sitting in the driver's seat and the head of an occupant (not shown) sitting in a front passenger seat (collision between the heads of the two occupants) can be reduced or prevented, and the heads of the occupants can be protected. The check valves 42 may be mounted in the upper opening 40B and the lower opening 40C of the sub-chamber 40 instead of the main chamber 38.

### Method for Folding Far Side Airbag

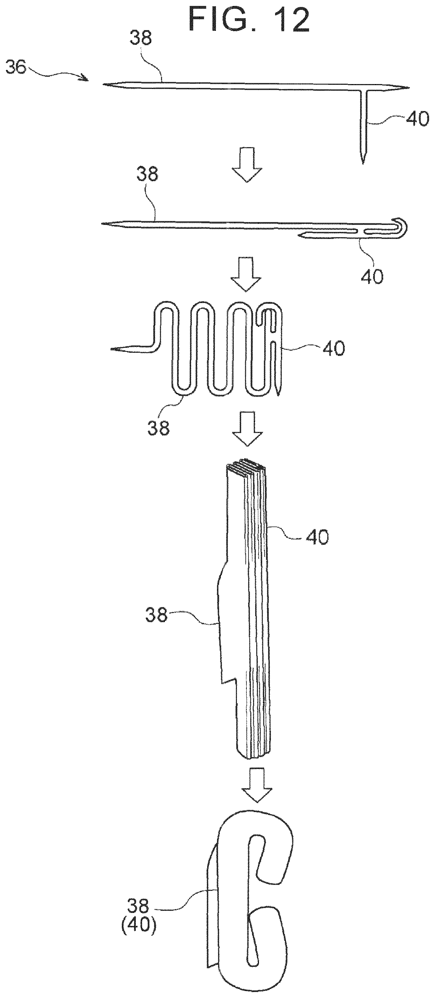

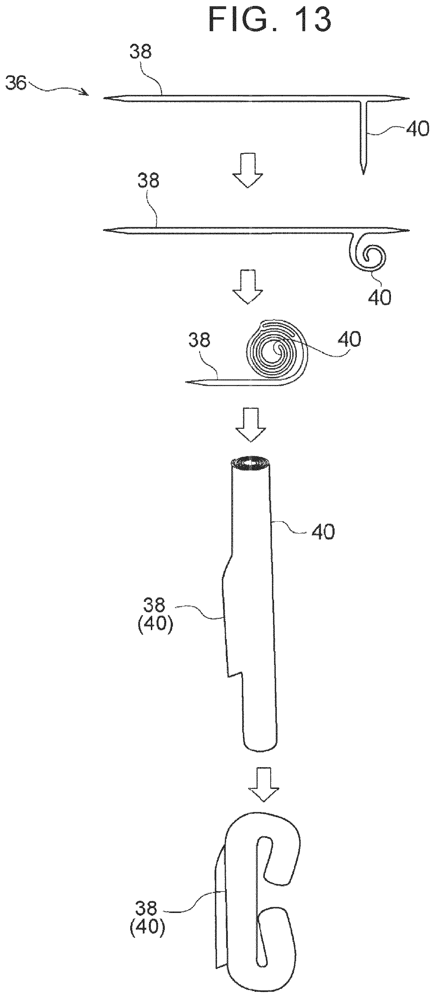

Lastly, methods for folding the far side airbag 36 (a bellows folding method shown in FIG. 12 and a roll folding method shown in FIG. 13) will be described.

As shown in FIG. 12, the far side airbag 36 is folded in a manner described below. First, the sub-chamber 40 is flattened onto the main chamber 38 (flattening step). Next, the flattened sub-chamber 40 and the main chamber 38 are folded in bellows along creases extending in the up-down direction (bellows folding step). After that, the main chamber 38 and the sub-chamber 40 are folded so as to bring the upper ends of the main chamber 38 and the sub-chamber 40 and the lower ends of the main chamber 38 and the sub-chamber 40 close to each other (folding step).

According to this method, the sub-chamber 40 and the main chamber 38 can be folded compactly even when the sub-chamber 40 is connected to the main chamber 38. The method for folding the far side airbag 36 is not limited to this, and the far side airbag 36 may be folded by the following folding method.

As shown in FIG. 13, the sub-chamber 40 is first wound outward into a roll on the main chamber 38 such that the axial direction of the roll matches the up-down direction (first outward winding step). The term "outward winding" refers to a method for winding into a roll on the opposite side from the side closer to the occupant P. Next, the roll of the sub-chamber 40 together with the main chamber 38 is wounded outward into a roll such that the axial direction of the roll matches the up-down direction (second outward winding step). After that, the main chamber 38 and the sub-chamber 40 are folded so as to bring the upper ends of the main chamber 38 and the sub-chamber 40 and the lower ends of the main chamber 38 and the sub-chamber 40 close to each other (folding step).

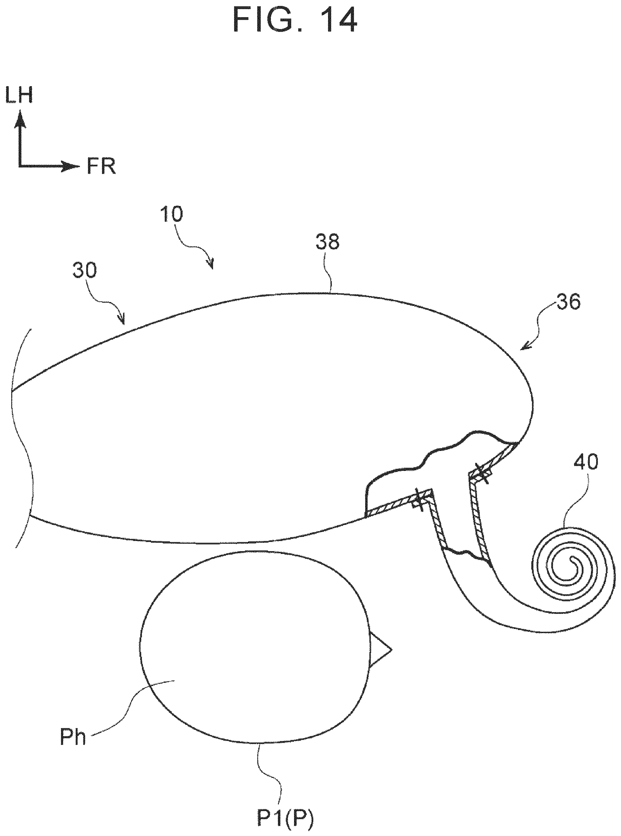

According to this method, the sub-chamber 40 and the main chamber 38 can be folded compactly even when the sub-chamber 40 is connected to the main chamber 38. Moreover, in the case of such a roll folding method, the sub-chamber 40 is wound outward. This reduces or prevents the case where the sub-chamber 40 hits the face of the occupant P sitting in the vehicle seat 12 when the sub-chamber 40 is inflated and deployed, as shown in FIG. 14.

For example, each of the upper communication hole 38B and the lower communication hole 38C is not limited to the illustrated circular shape, and may have a triangular shape, a rectangular shape, etc.

The position of the lower end face 40D (lower end, see FIGS. 7 and 9) of the sub-chamber 40 as viewed from the side is not limited to the illustrated position. The position of the lower end face 40D of the sub-chamber 40 may be lower than the illustrated position. That is, the lower end face 40D of the sub-chamber 40 in the fully inflated and deployed state may be located at substantially the same height position as the lower end face 38D of the front portion 38F of the main chamber 38 in the fully inflated and deployed state.

## Claims

1. A vehicle occupant restraint device (10) comprising:
a vehicle seat (12) installed in a vehicle cabin so as to move in a vehicle front-rear direction;
; and
a far side airbag (36) installed in an inner side portion in the vehicle width direction of a seatback (16) of the vehicle seat (12), the far side airbag (36) being configured to be inflated and deployed toward an inner side in the vehicle width direction of an occupant (P, P1, P2) sitting in the vehicle seat as gas is supplied from an inflator (32) into the far side airbag (36), wherein
the far side airbag (36) includes
a main chamber (38), and
a sub-chamber (40) having an upper opening (40B) that communicates with an upper communication hole (38B) in an upper portion of the main chamber (38) and a lower opening (40C) that communicates with a lower communication hole (38C) in a lower portion of the main chamber (38), the sub-chamber (40) being configured to be inflated and deployed inward in a seat width direction from a front portion (38F) of the main chamber (38) as the gas is supplied from the upper opening (40B) and the lower opening (40C) into the sub-chamber (40),
the vehicle occupant restraint device being **characterized in that** the vehicle occupant restraint device also comprises a console box (20) installed inward of the vehicle seat (12) in a vehicle width direction in the vehicle cabin, and **in that** the main chamber (38) of the far side airbag (36) is configured in such a manner that a lower end (38D) of the main chamber (38) is located below an upper face (28A) of the console box (20) in a vehicle up-down direction when the main chamber (38) is in a fully inflated and deployed state, the main chamber (38) being configured to cover the occupant (P, P1, P2) at least from a waist (Pw) to a head (Ph) as viewed from a side when in the fully inflated and deployed state and including a constricted portion (38A) configured to be recessed rearward in the vehicle front-rear direction as viewed from the side when the main chamber (38) is in the fully inflated and deployed state, the constricted portion (38A) being located in a middle part in the vehicle up-down direction of the front portion (38F) of the main chamber (38) in the fully inflated and deployed state, and the constricted portion (38A) being configured to be covered from inside in the seat width direction by the sub-chamber (40) in a fully inflated and deployed state.

2. The vehicle occupant restraint device (10) according to claim 1, wherein an upper end (40U) of the sub-chamber (40) in the fully inflated and deployed state is located at a same height position as an upper end (38U) of the front portion (38F) of the main chamber (38) in the fully inflated and deployed state, as viewed from the side.

3. The vehicle occupant restraint device (10) according to any one of claims 1 and 2, wherein a peripheral portion of the upper opening (40B) of the sub-chamber (40) is sewn to a peripheral portion of the upper communication hole (38B) of the main chamber (38), and a peripheral portion of the lower opening (40C) of the sub-chamber (40) is sewn to a peripheral portion of the lower communication hole (38C) of the main chamber (38).

4. The vehicle occupant restraint device (10) according to any one of claims 1 and 2, wherein a peripheral edge portion (40A) of an overlapping portion of the sub-chamber (40) is sewn to the main chamber (38), the overlapping portion overlapping the main chamber (38) as viewed from the side.

5. The vehicle occupant restraint device (10) according to any one of claims 1 and 2, wherein:
the lower communication hole (38C) of the main chamber (38) has a larger opening area than the upper communication hole (38B) of the main chamber (38); and
the lower opening (40C) of the sub-chamber (40) has a larger opening area than the upper opening (40B) of the sub-chamber (40).

6. The vehicle occupant restraint device (10) according to any one of claims 1 and 2, wherein check valves (42) configured not to allow backflow of the gas from the sub-chamber (40) into the main chamber (38) are located in the upper communication hole (38B) and the lower communication hole (38C) of the main chamber (38) or in the upper opening (40B) and the lower opening (40C) of the sub-chamber (40).

7. A method for folding the far side airbag (36) in the vehicle occupant restraint device (10) according to any one of claims 1 and 2, the method comprising:
a flattening step of flattening the sub-chamber (40) onto the main chamber (38);
a bellows folding step of folding the sub-chamber (40) after the flattening step and the main chamber (38) in bellows along creases extending in the vehicle up-down direction; and
a folding step of folding the main chamber (38) and the sub-chamber (40) after the bellows folding step so as to bring upper ends of the main chamber (38) and the sub-chamber (40) and lower ends of the main chamber (38) and the sub-chamber (40) close to each other.

8. A method for folding the far side airbag (36) in the vehicle occupant restraint device (10) according to any one of claims 1 and 2, the method comprising:
a first outward winding step of winding the sub-chamber (40) outward into a roll on the main chamber (38) in such a manner that an axial direction of the roll of the sub-chamber (40) matches the vehicle up-down direction;
a second outward winding step of winding the sub-chamber (40) after the first outward winding step and the main chamber (38) outward into a roll in such a manner that an axial direction of the roll of the main chamber (38) and the sub-chamber (40) matches the vehicle up-down direction; and
a folding step of folding the main chamber (38) and the sub-chamber (40) after the second outward winding step so as to bring upper ends of the main chamber (38) and the sub-chamber (40) and lower ends of the main chamber (38) and the sub-chamber (40) close to each other.

## Patentansprüche

1. Fahrzeuginsassen-Rückhaltevorrichtung (10), umfassend:
einen Fahrzeugsitz (12), der in einer Fahrzeugkabine installiert ist, um sich in einer Vor-/Rückwärtsrichtung des Fahrzeugs zu bewegen; und
einen Fernseite-Airbag (36), der in einem inneren Seitenabschnitt in Richtung der Fahrzeugbreite einer Sitzlehne (16) des Fahrzeugsitzes (12) installiert ist, der Fernseite-Airbag (36) konfiguriert ist, um aufgeblasen und in Richtung einer Innenseite in Richtung der Fahrzeugbreite eines Insassen (P, P1, P2), der auf dem Fahrzeugsitz sitzt, entfaltet zu werden, wenn von einer Aufblasvorrichtung (32) Gas in den Fernseite-Airbag (36) zugeführt wird, wobei
der Fernseite-Airbag (36) Folgendes beinhaltet
eine Hauptkammer (38), und
eine Nebenkammer (40), die eine obere Öffnung (40B), die mit einem oberen Verbindungsloch (38B) in einem oberen Abschnitt der Hauptkammer (38) in Verbindung ist, und eine untere Öffnung (40C), die mit einem unteren Verbindungsloch (38C) in einem unteren Abschnitt der Hauptkammer (38) in Verbindung ist, aufweist, wobei die Nebenkammer (40) konfiguriert ist, um von einem vorderen Abschnitt (38F) der Hauptkammer (38) nach innen in Richtung der Sitzbreite aufgeblasen und entfaltet zu werden, wenn das Gas von der oberen Öffnung (40B) und der unteren Öffnung (40C) in die Nebenkammer (40) zugeführt wird,
wobei die Fahrzeuginsassen-Rückhaltevorrichtung **dadurch gekennzeichnet ist, dass** die Fahrzeuginsassen-Rückhaltevorrichtung auch einen Konsolenkasten (20) umfasst, der in einer Fahrzeugbreitenrichtung in der Fahrzeugkabine einwärts von dem Fahrzeugsitz (12) installiert ist, und dass die Hauptkammer (38) des hinteren Seitenairbags (36) auf eine Weise konfiguriert ist, dass sich ein unteres Ende (38D) der Hauptkammer (38) unterhalb einer oberen Fläche (28A) des Konsolenkastens (20) in einer Auf- /Abwärts-Richtung des Fahrzeugs befindet, wenn die Hauptkammer (38) in einem vollständig aufgeblasenen und entfalteten Zustand ist, die Hauptkammer (38) konfiguriert ist, um den Insassen (P, P1, P2) in dem vollständig aufgeblasenen und entfalteten Zustand von der Seite gesehen zumindest von einer Taille (Pw) bis zu dem Kopf (Ph) abzudecken, und einen verengten Abschnitt (38A), der konfiguriert ist, um von der Seite aus gesehen in der Vor-/Rückwärtsrichtung des Fahrzeugs nach hinten versetzt zu sein, wenn die Hauptkammer (38) in dem vollständig aufgeblasenen und entfalteten Zustand ist, sich der verengte Abschnitt (38A) in einem mittleren Teil in der Auf-/Abwärtsrichtung des Fahrzeugs des vorderen Abschnitts (38F) der Hauptkammer (38) in dem vollständig aufgeblasenen und entfalteten Zustand befindet, und wobei der verengte Abschnitt (38A) konfiguriert ist, um in einem vollständig aufgeblasenen und entfalteten Zustand von innen in Richtung der Sitzbreite durch die Nebenkammer (40) abgedeckt zu sein.

2. Fahrzeuginsassen-Rückhaltevorrichtung (10) nach Anspruch 1, wobei ein oberes Ende (40U) der Nebenkammer (40) in dem vollständig aufgeblasenen und entfalteten Zustand sich in der gleichen Höhenposition wie ein oberes Ende (38U) des vorderen Abschnitts (38F) der Hauptkammer (38) in dem vollständig aufgeblasenen und entfalteten Zustand, von der Seite gesehen, befindet.

3. Fahrzeuginsassen-Rückhaltevorrichtung (10) nach einem der Ansprüche 1 und 2, wobei ein Umfangsabschnitt der oberen Öffnung (40B) der Nebenkammer (40) an einen Umfangsabschnitt des oberen Verbindungslochs (38B) der Hauptkammer (38) genäht ist, und ein Umfangsabschnitt der unteren Öffnung (40C) der Nebenkammer (40) an einen Umfangsabschnitt des unteren Verbindungslochs (38C) der Hauptkammer (38) genäht ist.

4. Fahrzeuginsassen-Rückhaltevorrichtung (10) nach einem der Ansprüche 1 und 2, wobei ein Umfangsrandabschnitt (40A) eines überlappenden Abschnitts der Nebenkammer (40) an die Hauptkammer (38) genäht ist, wobei der überlappende Abschnitt die Hauptkammer (38) von der Seite gesehen überlappt.

5. Fahrzeuginsassen-Rückhaltevorrichtung (10) nach einem der Ansprüche 1 und 2, wobei:
das untere Verbindungsloch (38C) der Hauptkammer (38) eine größere Öffnungsfläche aufweist als das obere Verbindungsloch (38B) der Hauptkammer (38); und
die untere Öffnung (40C) der Nebenkammer (40) eine größere Öffnungsfläche aufweist als die obere Öffnung (40B) der Nebenkammer (40).

6. Fahrzeuginsassen-Rückhaltevorrichtung (10) nach einem der Ansprüche 1 und 2, wobei Rückschlagventile (42), die konfiguriert sind, um keinen Rückfluss des Gases aus der Nebenkammer (40) in die Hauptkammer (38) zuzulassen, sich in dem oberen Verbindungsloch (38B) und dem unteren Verbindungsloch (38C) der Hauptkammer (38) oder in der oberen Öffnung (40B) und der unteren Öffnung (40C) der Nebenkammer (40) befinden.

7. Verfahren zum Falten des Fernseite-Airbags (36) in der Fahrzeuginsassen-Rückhaltevorrichtung (10) nach einem der Ansprüche 1 und 2, das Verfahren umfassend:
einen Abflachungsschritt, bei dem die Nebenkammer (40) auf die Hauptkammer (38) abgeflacht wird;
einen Faltenbalgfaltschritt zum Falten der Nebenkammer (40) nach dem Abflachungsschritt und der Hauptkammer (38) in Faltenbälgen entlang von Falten, die sich in der Auf-/Abwärtsrichtung des Fahrzeugs erstrecken; und
einen Faltschritt zum Falten der Hauptkammer (38) und der Nebenkammer (40) nach dem Faltenbalgfaltschritt, um die oberen Enden der Hauptkammer (38) und der Nebenkammer (40) und die unteren Enden der Hauptkammer (38) und der Nebenkammer (40) nahe zueinander zu bringen.

8. Verfahren zum Falten des Fernseite-Airbags (36) in der Fahrzeuginsassen-Rückhaltevorrichtung (10) nach einem der Ansprüche 1 und 2, das Verfahren umfassend:
einen ersten Auswärtswickelschritt eines Aufwickelns der Nebenkammer (40) nach außen zu einer Rolle auf der Hauptkammer (38) auf eine Weise, dass eine axiale Richtung der Rolle der Nebenkammer (40) mit der Auf-/Abwärtsrichtung des Fahrzeugs übereinstimmt;
einen zweiten Auswärtswickelschritt eines Aufwickelns der Nebenkammer (40) nach dem ersten Auswärtswickelschritt und der Hauptkammer (38) nach außen zu einer Rolle auf eine solche Weise, dass eine axiale Richtung der Rolle der Hauptkammer (38) und der Nebenkammer (40) mit der Auf-/Abwärtsrichtung des Fahrzeugs übereinstimmt; und
einen Faltschritt eines Faltens der Hauptkammer (38) und der Nebenkammer (40) nach dem zweiten Auswärtswickelschritt, um die oberen Enden der Hauptkammer (38) und der Nebenkammer (40) und die unteren Enden der Hauptkammer (38) und der Nebenkammer (40) nahe zueinander zu bringen.

## Revendications

1. Dispositif de retenue d'occupant de véhicule (10) comprenant :
un siège de véhicule (12) installé dans un habitacle de véhicule de façon à se déplacer dans une direction avant-arrière de véhicule ; et
un coussin gonflable du côté éloigné (36) installé dans une partie du côté intérieur dans la direction de largeur de véhicule d'un dossier de siège (16) du siège de véhicule (12), le coussin gonflable du côté éloigné (36) étant configuré pour être gonflé et déployé vers un côté intérieur dans la direction de largeur de véhicule d'un occupant (P, P1, P2) assis dans le siège de véhicule lorsque du gaz est délivré depuis un dispositif de gonflage (32) dans le coussin gonflable du côté éloigné (36), dans lequel
le coussin gonflable du côté éloigné (36) comprend une chambre principale (38), et
une chambre secondaire (40) ayant une ouverture supérieure (40B) qui communique avec un trou de communication supérieur (38B) dans une partie supérieure de la chambre principale (38) et une ouverture inférieure (40C) qui communique avec un trou de communication inférieur (38C) dans une partie inférieure de la chambre principale (38), la chambre secondaire (40) étant configurée pour être gonflée et déployée vers l'intérieur dans une direction de largeur de siège depuis une partie avant (38F) de la chambre principale (38) lorsque le gaz est délivré depuis l'ouverture supérieure (40B) et l'ouverture inférieure (40C) dans la chambre secondaire (40),
le dispositif de retenue d'occupant de véhicule étant **caractérisé en ce que** le dispositif de retenue d'occupant de véhicule comprend également une boîte de console (20) installée vers l'intérieur du siège de véhicule (12) dans une direction de largeur de véhicule dans l'habitacle de véhicule, et **en ce que** la chambre principale (38) du coussin gonflable du côté éloigné (36) est configurée d'une manière telle qu'une extrémité inférieure (38D) de la chambre principale (38) se trouve au-dessous d'une face supérieure (28A) de la boîte de console (20) dans une direction haut-bas de véhicule quand la chambre principale (38) est dans un état entièrement gonflé et déployé, la chambre principale (38) étant configurée pour recouvrir l'occupant (P, P1, P2) au moins depuis la taille (Pw) jusqu'à la tête (Ph) en vue de côté dans l'état entièrement gonflé et déployé et comprenant une partie resserrée (38A) configurée pour être renfoncée vers l'arrière dans la direction avant-arrière de véhicule en vue de côté quand la chambre principale (38) est dans l'état entièrement gonflé et déployé, la partie resserrée (38A) se trouvant dans une partie médiane dans la direction haut-bas de véhicule de la partie avant (38F) de la chambre principale (38) dans l'état entièrement gonflé et déployé, et la partie resserrée (38A) étant configurée pour être recouverte depuis l'intérieur dans la direction de largeur de siège par la chambre secondaire (40) dans un état entièrement gonflé et déployé.

2. Dispositif de retenue d'occupant de véhicule (10) selon la revendication 1, dans lequel une extrémité supérieure (40U) de la chambre secondaire (40) dans l'état entièrement gonflé et déployé se trouve dans une position de même hauteur qu'une extrémité supérieure (38U) de la partie avant (38F) de la chambre principale (38) dans l'état entièrement gonflé et déployé, en vue de côté.

3. Dispositif de retenue d'occupant de véhicule (10) selon l'une quelconque des revendications 1 et 2, dans lequel une partie périphérique de l'ouverture supérieure (40B) de la chambre secondaire (40) est cousue sur une partie périphérique du trou de communication supérieur (38B) de la chambre principale (38), et une partie périphérique de l'ouverture inférieure (40C) de la chambre secondaire (40) est cousue sur une partie périphérique du trou de communication inférieur (38C) de la chambre principale (38).

4. Dispositif de retenue d'occupant de véhicule (10) selon l'une quelconque des revendications 1 et 2, dans lequel une partie de bord périphérique (40A) d'une partie de recouvrement de la chambre secondaire (40) est cousue sur la chambre principale (38), la partie de recouvrement recouvrant la chambre principale (38) en vue de côté.

5. Dispositif de retenue d'occupant de véhicule (10) selon l'une quelconque des revendications 1 et 2, dans lequel :
le trou de communication inférieur (38C) de la chambre principale (38) a une section d'ouverture plus grande que le trou de communication supérieur (38B) de la chambre principale (38) ; et
l'ouverture inférieure (40C) de la chambre secondaire (40) a une section d'ouverture plus grande que l'ouverture supérieure (40B) de la chambre secondaire (40).

6. Dispositif de retenue d'occupant de véhicule (10) selon l'une quelconque des revendications 1 et 2, dans lequel des clapets anti-retour (42) configurés pour ne pas permettre un refoulement du gaz depuis la chambre secondaire (40) dans la chambre principale (38) se trouvent dans le trou de communication supérieur (38B) et le trou de communication inférieur (38C) de la chambre principale (38) ou dans l'ouverture supérieure (40B) et l'ouverture inférieure (40C) de la chambre secondaire (40).

7. Procédé de pliage du coussin gonflable du côté éloigné (36) dans le dispositif de retenue d'occupant de véhicule (10) selon l'une quelconque des revendications 1 et 2, le procédé comprenant :
une étape d'aplatissement destinée à aplatir la chambre secondaire (40) sur la chambre principale (38) ;
une étape de pliage de soufflet destinée à plier la chambre secondaire (40) après l'étape d'aplatissement et la chambre principale (38) en soufflet le long de plis s'étendant dans la direction haut-bas de véhicule ; et
une étape de pliage destinée à plier la chambre principale (38) et la chambre secondaire (40) après l'étape de pliage de soufflet de façon à amener des extrémités supérieures de la chambre principale (38) et de la chambre secondaire (40) et des extrémités inférieures de la chambre principale (38) et de la chambre secondaire (40) l'une près de l'autre.

8. Procédé de pliage du coussin gonflable du côté éloigné (36) dans le dispositif de retenue d'occupant de véhicule (10) selon l'une quelconque des revendications 1 et 2, le procédé comprenant :
une première étape d'enroulement vers l'extérieur destinée à enrouler la chambre secondaire (40) vers l'extérieur en un rouleau sur la chambre principale (38) d'une manière telle qu'une direction axiale du rouleau de la chambre secondaire (40) correspond à la direction haut-bas de véhicule ;
une deuxième étape d'enroulement vers l'extérieur destinée à enrouler la chambre secondaire (40) après la première étape d'enroulement vers l'extérieur et la chambre principale (38) vers l'extérieur en un rouleau d'une manière telle qu'une direction axiale du rouleau de la chambre principale (38) et de la chambre secondaire (40) correspond à la direction haut-bas de véhicule ; et
une étape de pliage destinée à plier la chambre principale (38) et la chambre secondaire (40) après la deuxième étape d'enroulement vers l'extérieur de façon à amener des extrémités supérieures de la chambre principale (38) et de la chambre secondaire (40) et des extrémités inférieures de la chambre principale (38) et de la chambre secondaire (40) l'une près de l'autre.
